# EUROPEAN PATENT SPECIFICATION

(11) **EP 3 119 146 B1**
(45) Date of publication and mention of the grant of the patent: **09.01.2019**
(21) Application number: 14885183.5
(22) Date of filing: 21.11.2014
(51) Int. Cl.: H04W 72/08, H04W 8/00, H04W 88/10

(54) **A METHOD FOR ALLOCATING RESOURCES AND A BASE STATION CONTROLLER THEREOF**
VERFAHREN ZUR ZUWEISUNG VON RESSOURCEN UND BASISSTATIONSSTEUERUNG DAFÜR
PROCÉDÉ D'ATTRIBUTION DE RESSOURCES ET CONTRÔLEUR DE STATION DE BASE ASSOCIÉ

(30) Priority: 12.03.2014 CN 201410091149
(43) Date of publication of application: 18.01.2017
(73) Proprietor: Huawei Technologies Co., Ltd., Longgang District Shenzhen, Guangdong 518129 (CN)
(72) Inventor: HE, Jia, Shenzhen Guangdong 518129 (CN); YU, Ziming, Shenzhen Guangdong 518129 (CN); ZHANG, Miaomiao, Shenzhen Guangdong 518129 (CN)
(74) Representative: Körber, Martin Hans
(86) International application number: PCT/CN2014/091938
(87) International publication number: WO 2015/135338

(56) References cited:
- EP-A1- 2 363 979
- EP-A2- 1 180 907
- WO-A1-2010/001394
- WO-A1-2012/044701
- CN-A- 102 595 501
- CN-A- 102 791 006
- CN-A- 102 948 088
- CN-A- 103 188 713
- CN-A- 103 347 293
- CN-A- 103 477 674
- US-A1- 2004 062 214
- US-A1- 2011 223 925
- US-A1- 2014 064 181

## Description

### TECHNICAL FIELD

The present invention relates to the communications field, and in particular, to a resource allocation method and a base station controller.

### BACKGROUND

In a broad sense, a base station is short for a BSS (base station subsystem), including a base station controller and a base station antenna. The base station antenna is classified into three types of antennas: an access antenna, a backhaul antenna, and a listening antenna. The listening antenna is used to receive, during a listening period, a reference signal sent by user equipment, so as to detect a reference signal of active user equipment and determine a position of an active user. The access antenna and the backhaul antenna are antennas used to perform service communication, where an access antenna is an antenna used to perform service communication between a base station and a user, and the backhaul antenna is an antenna used to perform data transmission between base stations.

In the prior art, an access antenna and a backhaul antenna are two different constituent parts in one base station, and both a resource quantity of the access antenna and a resource quantity of the backhaul antenna are fixed values. A resource of the access antenna and a resource of the backhaul antenna are selected in a resource redundancy manner, and the resource redundancy manner is: The resource quantity of the access antenna and that of the backhaul antenna are set to two or three times an actual resource quantity, or larger, to avoid an occurrence of such a burst case that data traffic of user equipment increases explosively. For example, an access antenna of 100 array element units and a backhaul antenna of 150 array element units can enable user equipment in an area in which the base station is located to work normally. In practice, a resource quantity of the access antenna is set to 200 array element units, and a resource quantity of the backhaul antenna is set to 300 array element units. However, if the user equipment does not encounter this kind of burst case for a long time, a resource of a redundant part is idle for a long time, which causes a waste of resources of a base station antenna, and therefore, resource utilization of the base station is relatively low.

From prior art documents EP1489760 and EP1184938 is known the art of load based adjustment of antenna components.

From prior art documents US6816706 and US8170544 is known the art of base stations operating with access antennas and backhaul antennas.

### SUMMARY

The present invention provides a resource allocation method and a base station controller, which can improve resource utilization.

To achieve the foregoing objective, the following technical solutions are used in the present invention:

According to a first aspect, a base station controller is provided, including:
a receiving unit, configured to receive reference signals sent by all active user equipment in a first sector during a current listening period, where the first sector is any sector of a base station antenna in a base station in which the base station controller is located;
a first determining unit, configured to determine the all active user equipment according to the reference signals;
a first acquiring unit, configured to acquire total data traffic of the first sector during the current listening period according to the all active user equipment;
a second determining unit, configured to determine a to-be-adjusted resource quantity of an access antenna and a to-be-adjusted resource quantity of a backhaul antenna in resources of the base station antenna according to the total data traffic of the first sector during the current listening period;
a generation unit, configured to generate control information, where the control information includes the to-be-adjusted resource quantity of the access antenna and the to-be-adjusted resource quantity of the backhaul antenna; and
a first sending unit, configured to send the control information to the base station antenna, where the control information includes the to-be-adjusted resource quantity of the access antenna and the to-be-adjusted resource quantity of the backhaul antenna, so that the base station antenna adjusts a resource of the access antenna and a resource of the backhaul antenna according to the control information.

With reference to the first aspect, in a first implementation, an initial resources of the base station antenna are allocated according to a preset proportion of the access antenna, the backhaul antenna, and a listening antenna.

With reference to the first implementation, in a second implementation, a parameter of the listening antenna is preset by the base station controller, and the parameter of the listening antenna includes a beam width, a beam angle, a listening period, and listening time that are of the listening antenna.

With reference to the second implementation, in a third implementation,
the second determining unit is specifically configured to:
acquire preset average data traffic of the first sector;
determine whether the total data traffic of the first sector during the current listening period is greater than the preset average data traffic of the first sector;
acquire a preset peak value of the first sector if the total data traffic of the first sector during the current listening period is greater than the preset average data traffic of the first sector;
determine whether the total data traffic of the first sector during the current listening period is greater than the preset peak value of the first sector;
acquire total data traffic of the first sector during a previous listening period if the total data traffic of the first sector during the current listening period is greater than the preset peak value of the first sector;
determine whether the total data traffic of the first sector during the previous listening period is greater than the preset peak value of the first sector; and
send a cooperative work request to another base station if the total data traffic of the first sector during the previous listening period is less than or equal to the preset peak value of the first sector, so that the another base station performs information transmission with user equipment in the first sector according to the cooperative work request.

With reference to the third implementation, in a fourth implementation,
the second determining unit is further configured to:
acquire the total data traffic of the first sector during the previous listening period if the total data traffic of the first sector during the current listening period is less than or equal to the preset peak value of the first sector;
determine whether the total data traffic of the first sector during the previous listening period is greater than the preset peak value of the first sector;
if the total data traffic of the first sector during the previous listening period is greater than the preset peak value of the first sector, send a cooperative stop request to another base station, so that the another base station stops performing information transmission with user equipment in the first sector according to the cooperative stop request;
obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and
if the total data traffic of the first sector during the previous listening period is less than or equal to the preset peak value of the first sector, obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

With reference to the third implementation, in a fifth implementation,
the second determining unit is further configured to:
if the total data traffic of the first sector during the current listening period is less than or equal to the preset average data traffic of the first sector, obtain a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

With reference to the fifth implementation, in a sixth implementation,
the base station controller further includes:
a second acquiring unit, configured to acquire a total quantity of the all active user equipment;
a judging unit, configured to determine whether the total quantity of the all active user equipment is 0; and
a second sending unit, configured to: if the total quantity of the all active user equipment is 0, send, to the base station antenna, a disabling indication used to instruct to disable all access antennas in the first sector.

According to a second aspect, a resource allocation method is provided and is applied to a base station controller, including:
receiving reference signals sent by all active user equipment in a first sector during a current listening period, where the first sector is any sector of a base station antenna in a base station in which the base station controller is located;
determining the all active user equipment according to the reference signals;
acquiring total data traffic of the first sector during the current listening period according to the all active user equipment;
determining a to-be-adjusted resource quantity of an access antenna and a to-be-adjusted resource quantity of a backhaul antenna in resources of the base station antenna according to the total data traffic of the first sector during the current listening period;
generating control information, where the control information includes the to-be-adjusted resource quantity of the access antenna and the to-be-adjusted resource quantity of the backhaul antenna; and
sending the control information to the base station antenna, where the control information includes the to-be-adjusted resource quantity of the access antenna and the to-be-adjusted resource quantity of the backhaul antenna, so that the base station antenna adjusts a resource of the access antenna and a resource of the backhaul antenna according to the control information.

With reference to the second aspect, in a first implementation, before the determining a to-be-adjusted resource quantity of an access antenna and a to-be-adjusted resource quantity of a backhaul antenna in resources of the base station antenna according to the total data traffic of the first sector during the current listening period, an initial resources of the base station antenna are allocated according to a preset proportion of the access antenna, the backhaul antenna, and a listening antenna.

With reference to the first implementation, in a second implementation, a parameter of the listening antenna is preset by the base station controller, and the parameter of the listening antenna includes a beam width, a beam angle, a listening period, and listening time that are of the listening antenna.

With reference to the second implementation, in a third implementation,
the determining a to-be-adjusted resource quantity of an access antenna and a to-be-adjusted resource quantity of a backhaul antenna in resources of the base station antenna according to the total data traffic of the first sector during the current listening period includes:
acquiring preset average data traffic of the first sector;
determining whether the total data traffic of the first sector during the current listening period is greater than the preset average data traffic of the first sector;
acquiring a preset peak value of the first sector if the total data traffic of the first sector during the current listening period is greater than the preset average data traffic of the first sector;
determining whether the total data traffic of the first sector during the current listening period is greater than the preset peak value of the first sector;
acquiring total data traffic of the first sector during a previous listening period if the total data traffic of the first sector during the current listening period is greater than the preset peak value of the first sector;
determining whether the total data traffic of the first sector during the previous listening period is greater than the preset peak value of the first sector; and
sending a cooperative work request to another base station if the total data traffic of the first sector during the previous listening period is less than or equal to the preset peak value of the first sector, so that the another base station performs information transmission with user equipment in the first sector according to the cooperative work request.

With reference to the third implementation, in a fourth implementation,
after the determining whether the total data traffic of the first sector during the current listening period is greater than the preset peak value of the first sector,
the determining a to-be-adjusted resource quantity of an access antenna and a to-be-adjusted resource quantity of a backhaul antenna in resources of the base station antenna according to the total data traffic of the first sector during the current listening period, further includes:
acquiring the total data traffic of the first sector during the previous listening period if the total data traffic of the first sector during the current listening period is less than or equal to the preset peak value of the first sector;
determining whether the total data traffic of the first sector during the previous listening period is greater than the preset peak value of the first sector;
if the total data traffic of the first sector during the previous listening period is greater than the preset peak value of the first sector, sending a cooperative stop request to another base station, so that the another base station stops performing information transmission with user equipment in the first sector according to the cooperative stop request;
obtaining a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and
if the total data traffic of the first sector during the previous listening period is less than or equal to the preset peak value of the first sector, obtaining a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

With reference to the third implementation, in a fifth implementation,
after the determining whether the total data traffic of the first sector during the current listening period is greater than the preset average data traffic of the first sector, the resource allocation method further includes:
if the total data traffic of the first sector during the current listening period is less than or equal to the preset average data traffic of the first sector, obtaining a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

With reference to the fifth implementation, in a sixth implementation,
after the determining the all active user equipments according to the reference signals, the resource allocation method further includes:
acquiring a total quantity of the all active user equipment;
determining whether the total quantity of the all active user equipment is 0; and
if the total quantity of the all active user equipment is 0, sending, to the base station antenna, a disabling indication used to instruct to disable all access antennas in the first sector.

The present invention provides a resource allocation method and a base station controller. The method includes: receiving reference signals sent by all active user equipment in a first sector during a current listening period, where the first sector is any sector of a base station antenna in a base station in which the base station controller is located; determining the all active user equipment according to the reference signals; acquiring total data traffic of the first sector during the current listening period according to the all active user equipment; determining a to-be-adjusted resource quantity of an access antenna and a to-be-adjusted resource quantity of a backhaul antenna in resources of the base station antenna according to the total data traffic of the first sector during the current listening period; generating control information, where the control information includes the to-be-adjusted resource quantity of the access antenna and the to-be-adjusted resource quantity of the backhaul antenna; and sending the control information to the base station antenna. In this way, the base station controller may adjust a resource quantity of the access antenna and a resource quantity of the backhaul antenna according to a total quantity of active user equipment during the current listening period and the total data traffic of the first sector during the current listening period, which improves resource utilization of the base station antenna and saves resources of the base station.

### BRIEF DESCRIPTION OF DRAWINGS

To describe the technical solutions of the present invention more clearly, in the following the accompanying drawings are briefly introduced describing embodiments of the present invention or the prior art. Apparently, the accompanying drawings in the following description show merely some embodiments of the present invention.
FIG. 1 is a schematic structural diagram of a base station controller according to an embodiment of the present invention;
FIG. 2 is a schematic structural diagram of another base station controller according to an embodiment of the present invention;
FIG. 3 is a schematic structural diagram of still another base station controller according to an embodiment of the present invention;
FIG. 4 is a flowchart of a resource allocation method according to an embodiment of the present invention; and
FIG. 5 is a flowchart of another resource allocation method according to an embodiment of the present invention.

### DESCRIPTION OF EMBODIMENTS

The following clearly and completely describes the technical solutions of the present invention with reference to the accompanying drawings showing embodiments of the present invention. Apparently, the described embodiments are merely some but not all of the embodiments of the present invention.

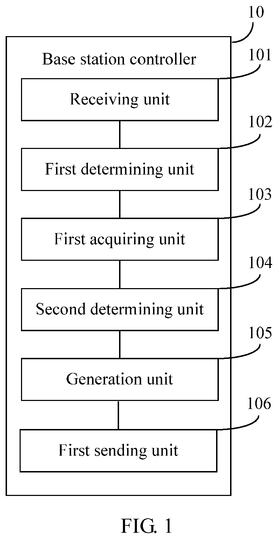

As shown in FIG. 1, an embodiment of the present invention provides a base station controller 10, including:
a receiving unit 101, configured to receive reference signals sent by all active user equipment in a first sector during a current listening period, where the first sector is any sector of a base station antenna in a base station in which the base station controller is located;
a first determining unit 102, configured to determine the all active user equipment according to the reference signals;
a first acquiring unit 103, configured to acquire total data traffic of the first sector during the current listening period according to the all active user equipment;
a second determining unit 104, configured to determine a to-be-adjusted resource quantity of an access antenna and a to-be-adjusted resource quantity of a backhaul antenna in resources of the base station antenna according to the total data traffic of the first sector during the current listening period, where
a parameter of a listening antenna is preset by the base station controller, and the parameter of the listening antenna includes a beam width, a beam angle, a listening period, and listening time that are of the listening antenna;
a generation unit 105, configured to generate control information, where the control information includes the to-be-adjusted resource quantity of the access antenna and the to-be-adjusted resource quantity of the backhaul antenna; and
a first sending unit 106, configured to send the control information to the base station antenna, where the control information includes the to-be-adjusted resource quantity of the access antenna and the to-be-adjusted resource quantity of the backhaul antenna, so that the base station antenna adjusts a resource of the access antenna and a resource of the backhaul antenna according to the control information.

In this way, the base station controller may adjust a resource quantity of the access antenna and a resource quantity of the backhaul antenna according to a total quantity of active user equipment during the current listening period and the total data traffic of the first sector during the current listening period, which improves resource utilization of the base station antenna and saves resources of the base station.

The initial resources of the base station antenna are allocated according to a preset proportion of the access antenna, the backhaul antenna, and the listening antenna. Compared with the prior art, each base station antenna can allocate resources to both an access antenna and a backhaul antenna, instead of only the access antenna or the backhaul antenna. Therefore, resources of the base station antenna are saved, and the access antenna and the backhaul antenna are located at a same base station, which implements integration of the base station antenna.

The second determining unit 104 is specifically configured to:
acquire preset average data traffic of the first sector;
determine whether the total data traffic of the first sector during the current listening period is greater than the preset average data traffic of the first sector;
acquire a preset peak value of the first sector if the total data traffic of the first sector during the current listening period is greater than the preset average data traffic of the first sector;
determine whether the total data traffic of the first sector during the current listening period is greater than the preset peak value of the first sector;
acquire total data traffic of the first sector during a previous listening period if the total data traffic of the first sector during the current listening period is greater than the preset peak value of the first sector;
determine whether the total data traffic of the first sector during the previous listening period is greater than the preset peak value of the first sector; and
send a cooperative work request to another base station if the total data traffic of the first sector during the previous listening period is less than or equal to the preset peak value of the first sector, so that the another base station performs information transmission with user equipment in the first sector according to the cooperative work request.

Further, the second determining unit 104 is further configured to:
acquire the total data traffic of the first sector during the previous listening period if the total data traffic of the first sector during the current listening period is less than or equal to the preset peak value of the first sector;
determine whether the total data traffic of the first sector during the previous listening period is greater than the preset peak value of the first sector;
if the total data traffic of the first sector during the previous listening period is greater than the preset peak value of the first sector, send a cooperative stop request to another base station, so that the another base station stops performing information transmission with user equipment in the first sector according to the cooperative stop request;
obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and
if the total data traffic of the first sector during the previous listening period is less than or equal to the preset peak value of the first sector, obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

Further, the second determining unit 104 is further configured to:
if the total data traffic of the first sector during the current listening period is less than or equal to the preset average data traffic of the first sector, obtain a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

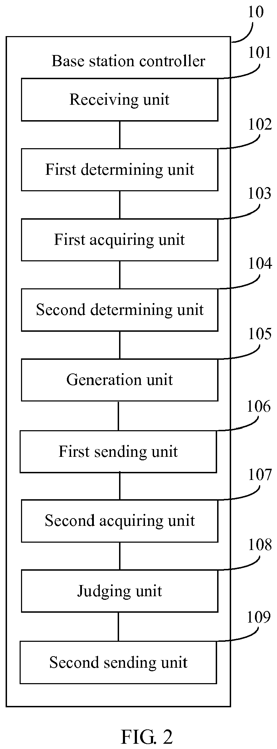

As shown in FIG. 2, the base station controller 10 further includes:
a second acquiring unit 107, configured to acquire a total quantity of the all active user equipment;
a judging unit 108, configured to determine whether the total quantity of the all active user equipment is 0; and
a second sending unit 109, configured to: if the total quantity of the all active user equipment is 0, send, to the base station antenna, a disabling indication used to instruct to disable all access antennas in the first sector.

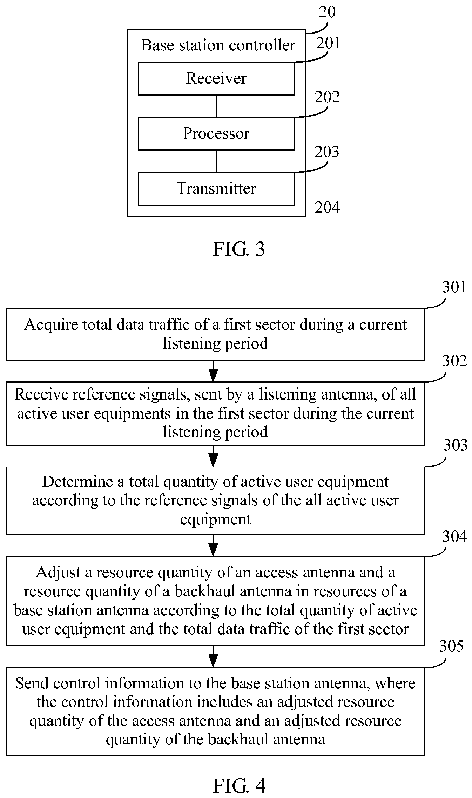

As shown in FIG. 3, an embodiment of the present invention provides a base station controller 20, including: a receiver 201, a processor 202, and a transmitter 203.

The receiver 201 is configured to receive reference signals sent by all active user equipment in a first sector during a current listening period, where the first sector is any sector of a base station antenna in a base station in which the base station controller is located; and
the processor 202 is configured to determine the all active user equipment according to the reference signals.

The processor 202 is further configured to acquire total data traffic of the first sector during the current listening period according to the all active user equipment.

The processor 202 is further configured to determine a to-be-adjusted resource quantity of an access antenna and a to-be-adjusted resource quantity of a backhaul antenna in resources of the base station antenna according to the total data traffic of the first sector during the current listening period.

A parameter of a listening antenna is preset by the base station controller, and the parameter of the listening antenna includes a beam width, a beam angle, a listening period, and listening time that are of the listening antenna.

The processor 202 is further configured to generate control information, where the control information includes the to-be-adjusted resource quantity of the access antenna and the to-be-adjusted resource quantity of the backhaul antenna.

The transmitter 203 is configured to send the control information to the base station antenna, where the control information includes the to-be-adjusted resource quantity of the access antenna and the to-be-adjusted resource quantity of the backhaul antenna, so that the base station antenna adjusts a resource of the access antenna and a resource of the backhaul antenna according to the control information.

In this way, the base station controller may adjust a resource quantity of the access antenna and a resource quantity of the backhaul antenna according to a total quantity of active user equipment during the current listening period and the total data traffic of the first sector during the current listening period, which improves resource utilization of the base station antenna and saves resources of the base station.

It should be noted that the initial resources of the base station antenna are allocated according to a preset proportion of the access antenna, the backhaul antenna, and the listening antenna. Compared with the prior art, each base station antenna can allocate resources to both an access antenna and a backhaul antenna, instead of only the access antenna or the backhaul antenna. Therefore, resources of the base station antenna are saved, and the access antenna and the backhaul antenna are located at a same base station, which implements integration of the base station antenna.

The processor 202 is further configured to:
acquire preset average data traffic of the first sector;
determine whether the total data traffic of the first sector during the current listening period is greater than the preset average data traffic of the first sector;
acquire a preset peak value of the first sector if the total data traffic of the first sector during the current listening period is greater than the preset average data traffic of the first sector;
determine whether the total data traffic of the first sector during the current listening period is greater than the preset peak value of the first sector;
acquire total data traffic of the first sector during a previous listening period if the total data traffic of the first sector during the current listening period is greater than the preset peak value of the first sector;
determine whether the total data traffic of the first sector during the previous listening period is greater than the preset peak value of the first sector; and
send a cooperative work request to another base station if the total data traffic of the first sector during the previous listening period is less than or equal to the preset peak value of the first sector, so that the another base station performs information transmission with user equipment in the first sector according to the cooperative work request.

Further, the processor 202 is further configured to:
acquire the total data traffic of the first sector during the previous listening period if the total data traffic of the first sector during the current listening period is less than or equal to the preset peak value of the first sector;
determine whether the total data traffic of the first sector during the previous listening period is greater than the preset peak value of the first sector;
if the total data traffic of the first sector during the previous listening period is greater than the preset peak value of the first sector, send a cooperative stop request to another base station, so that the another base station stops performing information transmission with user equipment in the first sector according to the cooperative stop request;
obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and
if the total data traffic of the first sector during the previous listening period is less than or equal to the preset peak value of the first sector, obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

Further, the processor 202 is further configured to:
if the total data traffic of the first sector during the current listening period is less than or equal to the preset average data traffic of the first sector, obtain a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

As shown in FIG. 3, the base station controller 20 further includes:

The processor 202 is further configured to acquire a total quantity of the all active user equipment.

The processor 202 is further configured to determine whether the total quantity of the all active user equipment is 0.

The transmitter 203 is further configured to: if the total quantity of the all active user equipment is 0, send, to the base station antenna, a disabling indication used to instruct to disable all access antennas in the first sector.

An embodiment of the present invention provides a resource allocation method applied to a base station controller, and as shown in FIG. 4, specific steps include the following:
Step 301: Receive reference signals sent by all active user equipment in a first sector during a current listening period, where the first sector is any sector of a base station antenna in a base station in which the base station controller is located.

A listening antenna is configured to: receive a reference signal sent by active user equipment and send the reference signal to the base station controller. A parameter of the listening antenna is preset by the base station controller, and the parameter of the listening antenna includes a beam width, a beam angle, a listening period, and listening time that are of the listening antenna. The active user equipment is user equipment that performs a data service with the base station, and silent user equipment is user equipment that has a capability to perform a data service with the base station but does not perform the data service.

Step 302: Determine the all active user equipment according to the reference signals.

Step 303: Acquire total data traffic of the first sector during the current listening period according to the all active user equipment.

Step 304: Determine a to-be-adjusted resource quantity of an access antenna and a to-be-adjusted resource quantity of a backhaul antenna in resources of the base station antenna according to the total data traffic of the first sector during the current listening period.

Step 305: Generate control information, where the control information includes the to-be-adjusted resource quantity of the access antenna and the to-be-adjusted resource quantity of the backhaul antenna.

Step 306: Send the control information to the base station antenna.

It should be noted that, before a resource quantity of the access antenna and a resource quantity of the backhaul antenna are adjusted, the resources of the antenna are allocated according to a preset proportion of the access antenna, the backhaul antenna, and the listening antenna.

In this way, the base station controller may adjust the resource quantity of the access antenna and the resource quantity of the backhaul antenna according to a total quantity of active user equipment during the current listening period and the total data traffic of the first sector during the current listening period, which improves resource utilization of the base station antenna and saves resources of the base station.

Before step 301, the resource allocation method further includes the following: The base station controller receives a registration request sent by first user equipment, where the first user equipment is any one of all unregistered user equipment; allocates a registration identifier to the first user equipment according to the registration request, where the registration identifier is in one-to-one correspondence with the first user equipment; and sends registration response information to the first user equipment, where the registration response information includes the registration identifier.

Further, step 304 that determine a to-be-adjusted resource quantity of an access antenna and a to-be-adjusted resource quantity of a backhaul antenna in resources of the base station antenna according to the total data traffic of the first sector during the current listening period, includes the following:

The base station controller may acquire preset average data traffic of the first sector; determine whether the total data traffic of the first sector during the current listening period is greater than the preset average data traffic of the first sector; acquire a preset peak value of the first sector if the total data traffic of the first sector during the current listening period is greater than the preset average data traffic of the first sector; and determine whether the total data traffic of the first sector during the current listening period is greater than the preset peak value of the first sector.

The base station controller acquires total data traffic of the first sector during a previous listening period if the total data traffic of the first sector during the current listening period is greater than the preset peak value of the first sector; determines whether the total data traffic of the first sector during the previous listening period is greater than the preset peak value of the first sector; and sends a cooperative work request to another base station if the total data traffic of the first sector during the previous listening period is less than or equal to the preset peak value of the first sector, so that the another base station performs information transmission with user equipment in the first sector according to the cooperative work request.

The base station controller acquires the total data traffic of the first sector during the previous listening period if the total data traffic of the first sector during the current listening period is less than or equal to the preset peak value of the first sector; determines whether the total data traffic of the first sector during the previous listening period is greater than the preset peak value of the first sector; if the total data traffic of the first sector during the previous listening period is greater than the preset peak value of the first sector, sends a cooperative stop request to another base station, so that the another base station stops performing information transmission with user equipment in the first sector according to the cooperative stop request; obtains a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and if the total data traffic of the first sector during the previous listening period is less than or equal to the preset peak value of the first sector, obtains a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

After the determining whether the total data traffic of the first sector during the current listening period is greater than the preset average data traffic of the first sector, the resource allocation method further includes:
if the total data traffic of the first sector during the current listening period is less than or equal to the preset average data traffic of the first sector, obtaining a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

Used to determine the all active user equipment according to the reference signals, the resource allocation method further includes:
acquiring a total quantity of the all active user equipment;
determining whether the total quantity of the all active user equipment is 0; and
if the total quantity of the all active user equipment is 0, sending, to the base station antenna, a disabling indication used to instruct to disable all access antennas in the first sector.

Before the to-be-adjusted resource quantity of the access antenna and the to-be-adjusted resource quantity of the backhaul antenna are determined in the resources of the base station antenna according to the total data traffic of the first sector during the current listening period, the initial resources of the base station antenna are allocated according to a preset proportion of the access antenna, the backhaul antenna, and the listening antenna. Compared with the prior art, each base station antenna can allocate resources to both an access antenna and a backhaul antenna, instead of only the access antenna or the backhaul antenna. Therefore, resources of the base station antenna are saved, and the access antenna and the backhaul antenna are located at a same base station, which implements integration of the base station antenna.

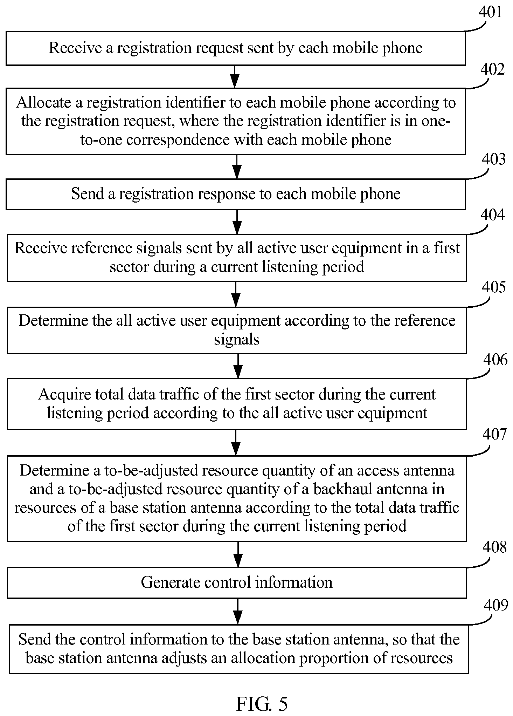

An embodiment of the present invention provides a resource allocation method applied to a base station controller. In this embodiment, that a base station starts working is used as an example, it is assumed that user equipment are mobile phones, and the mobile phones include an active mobile phone and a silent mobile phone. Specific steps are shown in FIG. 5, including:
Step 401: Receive a registration request sent by each mobile phone.

Because the base station controller cannot directly receive external information, a base station antenna receives the registration request and then sends the registration request to the base station controller.

Step 402: Allocate a registration identifier to each mobile phone according to the registration request, where the registration identifier is in one-to-one correspondence with the each mobile phone.

Step 403: Send a registration response to each mobile phone.

The registration response carries a registration identifier of a mobile phone, and the base station controller sends the registration response to the corresponding mobile phone by using the base station antenna.

Step 404: Receive reference signals sent by all active mobile phones in a first sector during a current listening period.

Specifically, for reference signals of all active mobile phones in the first sector sent by a listening antenna during the current listening period, the listening antenna sends the reference signals to the base station controller, where the reference signals of the active mobile phones are received by using the listeningantenna. A parameter of the listening antenna is preset by the base station controller, and the parameter of the listening antenna includes a beam width, a beam angle, a listening period, and listening time that are of the listening antenna.

Step 405: Determine the all active mobile phones according to the reference signals.

Specifically, an active mobile phone may receive a signal of a wireless local area network hotspot to obtain signal strength of the wireless local area network hotspot, and sends the signal strength, used as a reference signal, to the base station controller. The base station controller may obtain a distance from a position of the mobile phone to a transmit end of the wireless local area network hotspot according to contrast calculation between the signal strength and preset signal strength of the wireless local area network hotspot. If there are multiple transmit ends of wireless local area network hotspots, a distance from the mobile phone to each transmit end may be obtained. Then, position coordinates of the active mobile phone are calculated according to position coordinates of each transmit end of the wireless local area network hotspots. A range of the first sector is acquired, and it is determined whether the position coordinates of the active mobile phone are within the range of the first sector, where the active mobile phone is an active mobile phone in the first sector. It should be noted that there are still various methods for obtaining a position of the active mobile phone in the first sector in the present invention, for example, a direction of arrival estimation method.

Step 406: Acquire total data traffic of the first sector during the current listening period according to the all active mobile phones.

Step 407: Determine a to-be-adjusted resource quantity of an access antenna and a to-be-adjusted resource quantity of a backhaul antenna in resources of a base station antenna according to the total data traffic of the first sector during the current listening period.

Specifically, the base station controller first acquires preset average data traffic of the first sector and then determines whether the total data traffic of the first sector during the current listening period is greater than the preset average data traffic of the first sector. If the total data traffic of the first sector during the current listening period is greater than the preset average data traffic of the first sector, the base station controller first acquires a preset peak value of the first sector and then determines whether the total data traffic of the first sector during the current listening period is greater than the preset peak value of the first sector.

If the total data traffic of the first sector during the current listening period is greater than the preset peak value of the first sector, the base station controller may acquire total data traffic of the first sector during a previous listening period and determine whether the total data traffic of the first sector during the previous listening period is greater than the preset peak value. If data traffic of the first sector during the previous listening period is less than or equal to the preset peak value, the base station controller may send a cooperative work request to another base station, so that the another base station performs information transmission with a mobile phone in the first sector according to the cooperative work request. Specifically, the base station controller calculates a difference between the total data traffic of the first sector during the current listening period and the preset peak value of the first sector, so as to obtain a traffic difference, and selects, according to the traffic difference, one or more suitable base stations for scheduling. A resource allocation method of another base station is the same as that of the base station.

If the total data traffic of the first sector during the current listening period is less than or equal to the preset peak value of the first sector, the base station controller may acquire the total data traffic of the first sector during the previous listening period and then determine whether data traffic during the previous listening period is greater than the preset peak value of the first sector. If the data traffic during the previous listening period is greater than the preset peak value of the first sector, the base station controller sends a cooperative stop request to another base station, so that the another base station stops performing information transmission with a mobile phone in the first sector according to the cooperative stop request. The total data traffic of the first sector during the current listening period and the preset average data traffic of the first sector are compared to obtain a traffic difference. A resource quantity of resources is obtained according to the traffic difference, and then a corresponding to-be-increased resource quantity of the access antenna and a corresponding to-be-decreased resource quantity of the backhaul antenna are obtained. If the data traffic during the previous listening period is less than or equal to the preset peak value of the first sector, the total data traffic of the first sector during the current listening period and the preset average data traffic of the first sector are compared to obtain a traffic difference. A resource quantity of resources is obtained according to the traffic difference, and then a corresponding to-be-increased resource quantity of the access antenna and a corresponding to-be-decreased resource quantity of the backhaul antenna are obtained.

If the total data traffic of the first sector during the current listening period is less than or equal to the preset average data traffic of the first sector, a corresponding to-be-increased resource quantity of the backhaul antenna and a corresponding to-be-decreased resource quantity of the access antenna are obtained according to a traffic difference between the total data traffic of the first sector during the current listening period and the preset average data traffic of the first sector.

Step 408: Generate control information.

The control information includes a corresponding to-be-increased resource quantity of the backhaul antenna and a corresponding to-be-decreased resource quantity of the access antenna; or a corresponding to-be-decreased resource quantity of the backhaul antenna and a corresponding to-be-increased resource quantity of the access antenna.

Step 409: Send the control information to the base station antenna, so that the base station antenna adjusts an allocation proportion of resources.

For example, it is assumed that a football field that can accommodate twenty thousand people exists in a cell range corresponding to the first sector. When a football match is held, a quantity of people in the first sector during a current listening period increases explosively, and the base station controller may acquire total data traffic of the first sector during the current listening period, acquire a preset average data traffic of the first sector, and acquire a preset peak value of the first sector. If the total data traffic of the first sector during the current listening period is greater than the preset average data traffic, the base station controller determines whether the total data traffic of the first sector during the current listening period is greater than the preset peak value of the first sector. If the total data traffic of the first sector during the current listening period is greater than the preset peak value of the first sector, the base station controller acquires total data traffic of the first sector during a previous listening period. If the total data traffic of the first sector during the previous listening period is less than or equal to data traffic of a first listening period, the base station controller sends a cooperative work request to another base station. When the football match is over, the base station controller may acquire total data traffic of the first sector during a current listening period and acquire the preset average data traffic of the first sector. If the total data traffic of the first sector during the current listening period is greater than the preset average data traffic, the base station controller determines whether the total data traffic of the first sector during the current listening period is greater than the preset peak value of the first sector. If the total data traffic of the first sector during the current listening period is not greater than the preset peak value of the first sector, the base station controller acquires total data traffic of the first sector during a previous listening period, and determines whether the total data traffic of the first sector during the previous listening period is greater than the data traffic of the first listening period. If the total data traffic of the first sector during the previous listening period is greater than the data traffic of the first listening period, the base station controller sends a cooperative stop request to another base station, and adjusts resources of the base station antenna according to a difference between the total data traffic of the first sector during the current listening period and the preset peak value. An hour later after the match is over, people in the football field are increasingly fewer. The base station controller may acquire total data traffic of the first sector during a current listening period and acquire the preset average data traffic of the first sector. If the total data traffic of the first sector during the current listening period is less than or equal to the preset average data traffic, the base station controller adjusts the resources of the base station antenna, so as to increase a corresponding resource quantity of the backhaul antenna, and decrease a corresponding resource quantity of the access antenna. When the football field is closed, there is no active mobile phone in the first sector, and the base station controller sends, to the base station antenna, a disabling indication used to instruct to disable an access antenna corresponding to the first sector.

The embodiments of the present invention provide a resource acquiring method and a base station controller. The method includes: receiving reference signals sent by all active user equipment in a first sector during a current listening period, where the first sector is any sector of a base station antenna in a base station in which the base station controller is located; determining the all active user equipment according to the reference signals; acquiring total data traffic of the first sector during the current listening period according to the all active user equipment; determining a to-be-adjusted resource quantity of an access antenna and a to-be-adjusted resource quantity of a backhaul antenna in resources of the base station antenna according to the total data traffic of the first sector during the current listening period; generating control information, where the control information includes the to-be-adjusted resource quantity of the access antenna and the to-be-adjusted resource quantity of the backhaul antenna; and sending the control information to the base station antenna. In this way, the base station controller may adjust a resource quantity of the access antenna and a resource quantity of the backhaul antenna according to a total quantity of active user equipment during the current listening period and the total data traffic of the first sector during the current listening period, which improves resource utilization of the base station antenna and saves resources of the base station.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

It should be noted that a sequence of the steps of the resource allocation method provided in the embodiments of the present invention may be adjusted properly, and the steps may also be added or removed according to conditions. Any changed method readily figured out by a person skilled in the art within the technical scope disclosed in the present invention shall fall within the protection scope of the present invention, and therefore, details are not described again.

The foregoing descriptions are merely specific implementation manners of the present invention, but are not intended to limit the present invention.

## Claims

1. Abase station controller (10), comprising:
a receiving unit (101), configured to receive reference signals sent by all active user equipment in a first sector during a current listening period, wherein the first sector is any sector of a base station antenna in a base station in which the base station controller is located;
a first determining unit (102), configured to determine the all active user equipment according to the reference signals;
a first acquiring unit (103), configured to acquire total data traffic of the first sector during the current listening period according to the all active user equipment;
a second determining unit (104), configured to determine a to-be-adjusted resource quantity of an access antenna and a to-be-adjusted resource quantity of a backhaul antenna in resources of the base station antenna according to the total data traffic of the first sector during the current listening period;
a generation unit (105), configured to generate control information, wherein the control information comprises the to-be-adjusted resource quantity of the access antenna and the to-be-adjusted resource quantity of the backhaul antenna; and
a first sending unit (106), configured to send the control information to the base station antenna, so that the base station antenna adjusts a resource of the access antenna and a resource of the backhaul antenna according to the control information.

2. The base station controller (10) according to claim 1, wherein an initial resources of the base station antenna are allocated according to a preset proportion of the access antenna, the backhaul antenna, and a listening antenna.

3. The base station controller (10) according to claim 2, wherein a parameter of the listening antenna is preset by the base station controller, and the parameter of the listening antenna comprises a beam width, a beam angle, a listening period, and listening time that are of the listening antenna.

4. The base station controller (10) according to claim 3, wherein the second determining unit (104) is specifically configured to:
acquire preset average data traffic of the first sector;
determine whether the total data traffic of the first sector during the current listening period is greater than the preset average data traffic of the first sector;
acquire a preset peak value of the first sector if the total data traffic of the first sector during the current listening period is greater than the preset average data traffic of the first sector;
determine whether the total data traffic of the first sector during the current listening period is greater than the preset peak value of the first sector;
acquire total data traffic of the first sector during a previous listening period if the total data traffic of the first sector during the current listening period is greater than the preset peak value of the first sector;
determine whether the total data traffic of the first sector during the previous listening period is greater than the preset peak value of the first sector; and
send a cooperative work request to another base station if the total data traffic of the first sector during the previous listening period is less than or equal to the preset peak value of the first sector, so that the another base station performs information transmission with user equipment in the first sector according to the cooperative work request.

5. The base station controller according to claim 4, wherein
the second determining unit (104) is further configured to:
acquire the total data traffic of the first sector during the previous listening period if the total data traffic of the first sector during the current listening period is less than or equal to the preset peak value of the first sector;
determine whether the total data traffic of the first sector during the previous listening period is greater than the preset peak value of the first sector;
if the total data traffic of the first sector during the previous listening period is greater than the preset peak value of the first sector, send a cooperative stop request to another base station, so that the another base station stops performing information transmission with user equipment in the first sector according to the cooperative stop request;
obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and
if the total data traffic of the first sector during the previous listening period is less than or equal to the preset peak value of the first sector, obtain a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

6. The base station controller according to claim 4, wherein the second determining unit (104) is further configured to:
if the total data traffic of the first sector during the current listening period is less than or equal to the preset average data traffic of the first sector, obtain a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

7. The base station controller (10) according to claim 6, wherein the base station controller (10) further comprises:
a second acquiring unit (107), configured to acquire a total quantity of the all active user equipment;
a judging unit (108), configured to determine whether the total quantity of the all active user equipment is 0; and
a second sending unit (109), configured to: if the total quantity of the all active user equipment is 0, send, to the base station antenna, a disabling indication used to instruct to disable all access antennas in the first sector.

8. A resource allocation method, applied to a base station controller, wherein the method comprises:
receiving (301) reference signals sent by all active user equipment in a first sector during a current listening period, wherein the first sector is any sector of a base station antenna in a base station in which the base station controller is located;
determining (302) the all active user equipment according to the reference signals;
acquiring (303) total data traffic of the first sector during the current listening period according to the all active user equipment;
determining (304) a to-be-adjusted resource quantity of an access antenna and a to-be-adjusted resource quantity of a backhaul antenna in resources of the base station antenna according to the total data traffic of the first sector during the current listening period;
generating (305) control information, wherein the control information comprises the to-be-adjusted resource quantity of the access antenna and the to-be-adjusted resource quantity of the backhaul antenna; and
sending (306) the control information to the base station antenna, wherein the control information comprises the to-be-adjusted resource quantity of the access antenna and the to-be-adjusted resource quantity of the backhaul antenna, so that the base station antenna adjusts a resource of the access antenna and a resource of the backhaul antenna according to the control information.

9. The resource allocation method according to claim 8, wherein before the determining a to-be-adjusted resource quantity of an access antenna and a to-be-adjusted resource quantity of a backhaul antenna in resources of the base station antenna according to the total data traffic of the first sector during the current listening period, the initial resources of the base station antenna are allocated according to a preset proportion of the access antenna, the backhaul antenna, and a listening antenna.

10. The resource allocation method according to claim 9, wherein a parameter of the listening antenna is preset by the base station controller, and the parameter of the listening antenna comprises a beam width, a beam angle, a listening period, and listening time that are of the listening antenna.

11. The resource allocation method according to claim 10, wherein the determining a to-be-adjusted resource quantity of an access antenna and a to-be-adjusted resource quantity of a backhaul antenna in resources of the base station antenna according to the total data traffic of the first sector during the current listening period comprises:
acquiring preset average data traffic of the first sector;
determining whether the total data traffic of the first sector during the current listening period is greater than the preset average data traffic of the first sector;
acquiring a preset peak value of the first sector if the total data traffic of the first sector during the current listening period is greater than the preset average data traffic of the first sector;
determining whether the total data traffic of the first sector during the current listening period is greater than the preset peak value of the first sector;
acquiring total data traffic of the first sector during a previous listening period if the total data traffic of the first sector during the current listening period is greater than the preset peak value of the first sector;
determining whether the total data traffic of the first sector during the previous listening period is greater than the preset peak value of the first sector; and
sending a cooperative work request to another base station if the total data traffic of the first sector during the previous listening period is less than or equal to the preset peak value of the first sector, so that the another base station performs information transmission with user equipment in the first sector according to the cooperative work request.

12. The resource allocation method according to claim 11, wherein after the determining whether the total data traffic of the first sector during the current listening period is greater than the preset peak value of the first sector,
the determining a to-be-adjusted resource quantity of an access antenna and a to-be-adjusted resource quantity of a backhaul antenna in resources of the base station antenna according to the total data traffic of the first sector during the current listening period, further comprises:
acquiring the total data traffic of the first sector during the previous listening period if the total data traffic of the first sector during the current listening period is less than or equal to the preset peak value of the first sector;
determining whether the total data traffic of the first sector during the previous listening period is greater than the preset peak value of the first sector;
if the total data traffic of the first sector during the previous listening period is greater than the preset peak value of the first sector, sending a cooperative stop request to another base station, so that the another base station stops performing information transmission with user equipment in the first sector according to the cooperative stop request;
obtaining a corresponding to-be-decreased resource quantity of the backhaul antenna and a corresponding to-be-increased resource quantity of the access antenna according to a traffic difference between the total data traffic of the first sector during the current listening period and the preset average data traffic of the first sector; and
if the total data traffic of the first sector during the previous listening period is less than or equal to the preset peak value of the first sector, obtaining a corresponding to-be-decreased resource quantity of the backhaul antenna and a corresponding to-be-increased resource quantity of the access antenna according to a traffic difference between the total data traffic of the first sector during the current listening period and the preset average data traffic of the first sector.

13. The resource allocation method according to claim 11, wherein after the determining whether the total data traffic of the first sector during the current listening period is greater than the preset average data traffic of the first sector, the resource allocation method further comprises:
if the total data traffic of the first sector during the current listening period is less than or equal to the preset average data traffic of the first sector, obtaining a corresponding to-be-increased resource quantity of the backhaul antenna and a corresponding to-be-decreased resource quantity of the access antenna according to a traffic difference between the total data traffic of the first sector during the current listening period and the preset average data traffic of the first sector.

14. The resource allocation method according to claim 13, wherein after the determining the all active user equipment according to the reference signals, the resource allocation method further comprises:
acquiring a total quantity of the all active user equipment;
determining whether the total quantity of the all active user equipment is 0; and
if the total quantity of the all active user equipment is 0, sending, to the base station antenna, a disabling indication used to instruct to disable all access antennas in the first sector.

## Patentansprüche

1. Basisstationssteuerung (10), umfassend:
eine Empfängereinheit (101), konfiguriert zum Empfangen von Referenzsignalen, die während eines aktuellen Lauschzeitraums durch alle aktiven Benutzervorrichtungen in einem ersten Sektor gesendet werden, wobei der erste Sektor jeder Sektor einer Basisstationsantenne in einer Basisstation ist, in dem sich die Basisstationssteuerung befindet;
eine erste Bestimmungseinheit (102), konfiguriert zum Bestimmen aller aktiven Benutzervorrichtungen nach den Referenzsignalen;
eine erste Beschaffungseinheit (103), konfiguriert zum Beschaffen des gesamten Datentraffic des ersten Sektors während des aktuellen Lauschzeitraums nach allen aktiven Benutzervorrichtungen;
eine zweite Bestimmungseinheit (104), konfiguriert zum Bestimmen einer anzupassenden Ressourcenmenge einer Zugangsantenne und einer anzupassenden Ressourcenmenge einer Backhaul-Antenne in Ressourcen der Basisstationsantenne nach dem Gesamtdatentraffic des ersten Sektors während des aktuellen Lauschzeitraums;
eine Erzeugungseinheit (105), konfiguriert zum Erzeugen von Steuerinformationen, wobei die Steuerinformationen die anzupassende Ressourcenmenge der Zugangsantenne und die anzupassende Ressourcenmenge der Backhaul-Antenne umfassen; und
eine erste Sendeeinheit (106), konfiguriert zum Senden der Steuerinformationen an die Basisstationsantenne, sodass die Basisstationsantenne eine Ressource der Zugangsantenne und eine Ressource der Backhaul-Antenne nach den Steuerinformationen umfasst.

2. Basisstationssteuerung (10) nach Anspruch 1, wobei eine anfängliche Ressourcen der Basisstationsantenne nach einem voreingestellten Anteil der Zugangsantenne, der Backhaul-Antenne und einer Lauschantenne zugewiesen sind.

3. Basisstationssteuerung (10) nach Anspruch 2, wobei ein Parameter der Lauschantenne durch die Basisstationssteuerung vorhanden ist und der Parameter der Lauschantenne eine Strahlbreite, einen Strahlwinkel, einen Lauschzeitraum und einen Lauschzeitpunkt umfasst, die zu der Lauschantenne gehören.

4. Basisstationssteuerung (10) nach Anspruch 3, wobei die zweite Bestimmungseinheit (104) speziell konfiguriert ist, zum:
Erfassen des voreingestellten Durchschnittsdatentraffic des ersten Sektors;
Bestimmen, ob der Gesamtdatentraffic des ersten Sektors während des aktuellen Lauschzeitraums größer ist als der voreingestellte Durchschnittsdatentraffic des ersten Sektors;
Erfassen eines voreingestellten Spitzenwerts des ersten Sektors, wenn der Gesamtdatentraffic des ersten Sektors während des aktuellen Lauschzeitraums größer ist als der voreingestellte Durchschnittsdatentraffic des ersten Sektors;
Bestimmen, ob der Gesamtdatentraffic des ersten Sektors während des aktuellen Lauschzeitraums größer ist als der voreingestellte Spitzenwert des ersten Sektors;
Erfassen eines voreingestellten Spitzenwerts des ersten Sektors, wenn der Gesamtdatentraffic des ersten Sektors während des aktuellen Lauschzeitraums größer ist als der voreingestellte Durchschnittsdatentraffic des ersten Sektors;
Bestimmen, ob der Gesamtdatentraffic des ersten Sektors während des vorherigen Lauschzeitraums größer ist als der voreingestellte Spitzenwert des ersten Sektors; und
Senden einer kooperativen Arbeitsanfrage an eine andere Basisstation, wenn der Gesamtdatentraffic des ersten Sektors während des vorherigen Lauschzeitraums weniger als der oder gleich dem voreingestellten Spitzenwert des ersten Sektors ist, sodass die andere Basisstation eine Informationsübertragung mit der Benutzervorrichtung in dem ersten Sektor nach der kooperativen Arbeitsanfrage durchführt.

5. Basisstationssteuerung nach Anspruch 4, wobei
die zweite Bestimmungseinheit (104) ferner konfiguriert ist zum:
Erfassen des voreingestellten Spitzenwerts des ersten Sektors, wenn der Gesamtdatentraffic des ersten Sektors während des aktuellen Lauschzeitraums kleiner als der oder gleich dem voreingestellten Durchschnittsdatentraffic des ersten Sektors ist;
Bestimmen, ob der Gesamtdatentraffic des ersten Sektors während des vorherigen Lauschzeitraums größer ist als der voreingestellte Spitzenwert des ersten Sektors;
wenn der Gesamtdatentraffic des ersten Sektors während des vorherigen Lauschzeitraums größer ist als der voreingestellte Spitzenwert des ersten Sektors, Senden einer kooperativen Stoppanfrage an eine andere Basisstation, sodass die andere Basisstation die Durchführung der Informationsübertragung mit der Benutzervorrichtung in dem ersten Sektor nach der kooperativen Stoppanfrage stoppt;
Beschaffen einer entsprechenden zu verringernden Ressourcenmenge der Backhaul-Antenne und einer entsprechenden zu erhöhenden Ressourcenmenge der Zugangsantenne nach einer Traffic-Differenz zwischen dem Gesamtdatentraffic des ersten Sektors während des aktuellen Lauschzeitraums und dem voreingestellten Durchschnittsdatentraffic des ersten Sektors; und
wenn der Gesamtdatentraffic des ersten Sektors während des vorhergehenden Lauschzeitraums kleiner oder gleich dem voreingestellten Spitzenwert des ersten Sektors ist, Beschaffen einer entsprechenden zu verringernden Ressourcenmenge der Backhaul-Antenne und einer entsprechenden zu erhöhenden Ressourcenmenge der Zugangsantenne nach einer Traffic-Differenz zwischen dem Gesamtdatentraffic des ersten Sektors während des aktuellen Lauschzeitraums und dem voreingestellten Durchschnittsdatentraffic des ersten Sektors.

6. Basisstationssteuerung nach Anspruch 4, wobei die zweite Bestimmungseinheit (104) ferner konfiguriert ist, zum:
wenn der Gesamtdatentraffic des ersten Sektors während des aktuellen Lauschzeitraums kleiner oder gleich dem voreingestellten Durchschnittsdatentraffic ersten Sektors ist, Beschaffen einer entsprechenden zu erhöhenden Ressourcenmenge der Backhaul-Antenne und einer entsprechenden zu verringernden Ressourcenmenge der Zugangsantenne nach einer Traffic-Differenz zwischen dem Gesamtdatentraffic des ersten Sektors während des aktuellen Lauschzeitraums und dem voreingestellten Durchschnittsdatentraffic des ersten Sektors.

7. Basisstationssteuerung (10) nach Anspruch 6, wobei die Basisstationssteuerung (10) ferner umfasst:
eine zweite Beschaffungseinheit (107), konfiguriert zum Erfassen seiner Gesamtmenge aller aktiven Benutzervorrichtungen;
eine Beurteilungseinheit (108), konfiguriert zum Bestimmen, ob die Gesamtmenge aller aktiven Benutzervorrichtungen 0 ist; und
eine zweite Sendeeinheit (109), konfiguriert um: wenn die Gesamtmenge aller aktiven Benutzervorrichtungen 0 ist, eine Deaktivierungsanzeige an die Basisstationsantenne zu senden, die verwendet wird, um anzuweisen, alle Zugangsantennen in dem ersten Sektor zu deaktivieren.

8. Ressourcenzuweisungsverfahren, angewendet auf eine Basisstationssteuerung, wobei das Verfahren umfasst:
Empfang (301) von Referenzsignalen, die während eines aktuellen Lauschzeitraums durch alle aktiven Benutzervorrichtungen in einem ersten Sektor gesendet werden, wobei der erste Sektor jeder Sektor einer Basisstationsantenne in einer Basisstation ist, in dem sich die Basisstationssteuerung befindet;
Bestimmung (302) aller aktiven Benutzervorrichtungen nach den Referenzsignalen;
Beschaffen (303) des gesamten Datentraffic des ersten Sektors während des aktuellen Lauschzeitraums nach allen aktiven Benutzervorrichtungen;
Bestimmung (304) einer anzupassenden Ressourcenmenge einer Zugangsantenne und einer anzupassenden Ressourcenmenge einer Backhaul-Antenne in Ressourcen der Basisstationsantenne nach dem Gesamtdatentraffic des ersten Sektors während des aktuellen Lauschzeitraums;
Erzeugung (305) von Steuerinformationen, wobei die Steuerinformationen die anzupassende Ressourcenmenge der Zugangsantenne und die anzupassende Ressourcenmenge der Backhaul-Antenne umfasst; und
Senden (306) der Steuerinformationen an die Basisstationsantenne, wobei die Steuerinformationen die anzupassende Ressourcenmenge der Zugangsantenne und die anzupassende Ressourcenmenge der Backhaul-Antenne umfassen, sodass die Basisstationsantenne eine Ressource der Zugangsantenne und eine Ressource der Backhaul-Antenne nach den Steuerinformationen anpasst.

9. Ressourcenzuweisungsverfahren nach Anspruch 8, wobei vor der Bestimmung einer anzupassenden Ressourcenmenge einer Zugangsantenne und einer anzupassenden Ressourcenmenge einer Backhaul-Antenne in Ressourcen der Basisstationsantenne nach dem Gesamtdatentraffic des ersten Sektors während des aktuellen Lauschzeitraums die anfänglichen Ressourcen der Basisstationsantenne nach einem vorgegebenen Anteil der Zugangsantenne, der Backhaul-Antenne und einer Lauschantenne zugewiesen werden.

10. Ressourcenzuweisungsverfahren Anspruch 9, wobei ein Parameter der Lauschantenne durch die Basisstationssteuerung vorhanden ist und der Parameter der Lauschantenne eine Strahlbreite, einen Strahlwinkel, einen Lauschzeitraum, und einen Lauschzeitpunkt umfasst, die zu der Lauschantenne gehören.

11. Ressourcenzuweisungsverfahren nach Anspruch 10, wobei das Bestimmen einer anzupassenden Ressourcenmenge einer Zugangsantenne und einer anzupassenden Ressourcenmenge einer Backhaul-Antenne in Ressourcen der Basisstationsantenne nach dem Gesamtdatentraffic des ersten Sektors während des aktuellen Lauschzeitraums umfasst:
Erfassen des voreingestellten Durchschnittsdatentraffic des ersten Sektors;
Bestimmen, ob der Gesamtdatentraffic des ersten Sektors während des aktuellen Lauschzeitraums größer ist als der voreingestellte Durchschnittsdatentraffic des ersten Sektors;
Erfassen eines voreingestellten Spitzenwerts des ersten Sektors, wenn der Gesamtdatentraffic des ersten Sektors während des aktuellen Lauschzeitraums größer ist als der voreingestellte Durchschnittsdatentraffic des ersten Sektors;
Bestimmen, ob der Gesamtdatentraffic des ersten Sektors während des aktuellen Lauschzeitraums größer ist als der voreingestellte Spitzenwert des ersten Sektors;
Erfassen eines voreingestellten Spitzenwerts des ersten Sektors, wenn der Gesamtdatentraffic des ersten Sektors während des aktuellen Lauschzeitraums größer ist als der voreingestellte Durchschnittsdatentraffic des ersten Sektors;
Bestimmen, ob der Gesamtdatentraffic des ersten Sektors während des vorherigen Lauschzeitraums größer ist als der voreingestellte Spitzenwert des ersten Sektors; und
Senden einer kooperativen Arbeitsanfrage an eine andere Basisstation, wenn der Gesamtdatentraffic des ersten Sektors während des vorherigen Lauschzeitraums weniger als der oder gleich dem voreingestellten Spitzenwert des ersten Sektors ist, sodass die andere Basisstation eine Informationsübertragung mit der Benutzervorrichtung in dem ersten Sektor nach der kooperativen Arbeitsanfrage durchführt.

12. Ressourcenzuweisungsverfahren nach Anspruch 11, wobei nach dem Bestimmen, ob der Gesamtdatentraffic des ersten Sektors während des aktuellen Lauschzeitraums größer ist als der voreingestellte Spitzenwert des ersten Sektors die Bestimmung einer anzupassenden Ressourcenmenge einer Zugangsantenne und einer anzupassenden Ressourcenmenge einer Backhaul-Antenne in Ressourcen der Basisstationsantenne nach dem Gesamtdatentraffic des ersten Sektors während des aktuellen Lauschzeitraums ferner umfasst:
Erfassen des voreingestellten Spitzenwerts des ersten Sektors, wenn der Gesamtdatentraffic des ersten Sektors während des aktuellen Lauschzeitraums kleiner oder gleich dem voreingestellten Durchschnittsdatentraffic des ersten Sektors ist;
Bestimmen, ob der Gesamtdatentraffic des ersten Sektors während des vorherigen Lauschzeitraums größer ist als der voreingestellte Spitzenwert des ersten Sektors;
wenn der Gesamtdatentraffic des ersten Sektors während des vorherigen Lauschzeitraums größer ist als der voreingestellte Spitzenwert des ersten Sektors, Senden einer kooperativen Stoppanfrage an eine andere Basisstation, sodass die andere Basisstation die Durchführung der Informationsübertragung mit der Benutzervorrichtung in dem ersten Sektor nach der kooperativen Stoppanfrage stoppt;
Beschaffen einer entsprechenden zu verringernden Ressourcenmenge der Backhaul-Antenne und einer entsprechenden zu erhöhenden Ressourcenmenge der Zugangsantenne nach einer Traffic-Differenz zwischen dem Gesamtdatentraffic des ersten Sektors während des aktuellen Lauschzeitraums und dem voreingestellten Durchschnittsdatentraffic des ersten Sektors; und
wenn der Gesamtdatentraffic des ersten Sektors während des vorhergehenden Lauschzeitraums kleiner als der oder gleich dem voreingestellten Spitzenwert des ersten Sektors ist, Beschaffen einer entsprechenden zu verringernden Ressourcenmenge der Backhaul-Antenne und einer entsprechenden zu erhöhenden Ressourcenmenge der Zugangsantenne nach einer Traffic-Differenz zwischen dem Gesamtdatentraffic des ersten Sektors während des aktuellen Lauschzeitraums und dem voreingestellten Durchschnittsdatentraffic des ersten Sektors.

13. Ressourcenzuweisungsverfahren nach Anspruch 11, wobei das Ressourcenzuweisungsverfahren nach dem Bestimmen, ob der Gesamtdatentraffic des ersten Sektors während des aktuellen Lauschzeitraums größer ist als der voreingestellte Durchschnittsdatentraffic des ersten Sektors, ferner umfasst:
wenn der Gesamtdatentraffic des ersten Sektors während des aktuellen Lauschzeitraums kleiner oder gleich dem voreingestellten Durchschnittsdatentraffic ersten Sektors ist, Beschaffen einer entsprechenden zu erhöhenden Ressourcenmenge der Backhaul-Antenne und einer entsprechenden zu verringernden Ressourcenmenge der Zugangsantenne nach einer Traffic-Differenz zwischen dem Gesamtdatentraffic des ersten Sektors während des aktuellen Lauschzeitraums und dem voreingestellten Durchschnittsdatentraffic des ersten Sektors.

14. Ressourcenzuweisungsverfahren nach Anspruch 13, wobei das Ressourcenzuweisungsverfahren nach der Bestimmung aller aktiven Benutzervorrichtungen nach den Referenzsignalen ferner umfasst:
Beschaffung einer Gesamtmenge aller aktiven Benutzervorrichtungen;
Bestimmung, ob die Gesamtmenge aller aktiven Benutzervorrichtungen 0 ist; und
wenn die Gesamtmenge aller aktiven Benutzervorrichtungen 0 ist, Senden einer Deaktivierungsanzeige an die Basisstationsantenne, die verwendet wird, um anzuweisen, alle Zugangsantennen in dem ersten Sektor zu deaktivieren.

## Revendications

1. Contrôleur de station de base (10), comprenant :
une unité de réception (101) configurée pour recevoir des signaux de référence envoyés par tous les équipements d'utilisateurs actifs dans un premier secteur pendant une période d'écoute actuelle, le premier secteur étant un secteur quelconque d'une antenne de station de base dans une station de base dans laquelle le contrôleur de station de base est situé ;
une première unité de détermination (102), configurée pour déterminer tous les équipements d'utilisateurs actifs en fonction des signaux de référence ;
une première unité d'acquisition (103), configurée pour acquérir un trafic de données total du premier secteur pendant la période d'écoute actuelle en fonction de tous les équipements d'utilisateurs actifs ;
une seconde unité de détermination (104), configurée pour déterminer une quantité de ressources à ajuster d'une antenne d'accès et une quantité de ressources à ajuster d'une antenne de rétroaction dans des ressources de l'antenne de station de base en fonction du trafic de données total du premier secteur pendant la période d'écoute actuelle ;
une unité de génération (105), configurée pour générer des informations de commande, les informations de commande comprenant la quantité de ressources à ajuster de l'antenne d'accès et la quantité de ressources à ajuster de l'antenne de rétroaction ; et
une première unité d'envoi (106), configurée pour envoyer les informations de commande à l'antenne de station de base, de sorte que l'antenne de station de base ajuste une ressource de l'antenne d'accès et une ressource de l'antenne de rétroaction en fonction des informations de commande.

2. Contrôleur de station de base (10) selon la revendication 1, les ressources initiales de l'antenne de station de base étant attribuées en fonction d'une proportion prédéfinie de l'antenne d'accès, de l'antenne de rétroaction et d'une antenne d'écoute.

3. Contrôleur de station de base (10) selon la revendication 2, un paramètre de l'antenne d'écoute étant prédéfini par le contrôleur de station de base, et le paramètre de l'antenne d'écoute comprenant une largeur de faisceau, un angle de faisceau, une période d'écoute et un temps d'écoute qui sont de l'antenne d'écoute.

4. Contrôleur de station de base (10) selon la revendication 3, la seconde unité de détermination (104) étant spécifiquement configurée pour :
acquérir un trafic de données moyen prédéfini du premier secteur ;
déterminer si le trafic de données total du premier secteur pendant la période d'écoute actuelle est supérieur au trafic de données moyen prédéfini du premier secteur ;
acquérir une valeur de crête prédéfinie du premier secteur si le trafic de données total du premier secteur pendant la période d'écoute actuelle est supérieur au trafic de données moyen prédéfini du premier secteur ;
déterminer si le trafic de données total du premier secteur pendant la période d'écoute actuelle est supérieur à la valeur de crête prédéfinie du premier secteur ;
acquérir un trafic de données total du premier secteur pendant une période d'écoute précédente si le trafic de données total du premier secteur pendant la période d'écoute actuelle est supérieur à la valeur de crête prédéfinie du premier secteur ;
déterminer si le trafic de données total du premier secteur pendant la période d'écoute précédente est supérieur à la valeur de pic prédéfinie de la première période ; et envoyer une demande de travail coopératif à une autre station de base si le trafic de données total du premier secteur pendant la période d'écoute précédente est inférieur ou égal à la valeur de crête prédéfinie du premier secteur, de sorte que l'autre station de base effectue une transmission d'informations avec un équipement d'utilisateur dans le premier secteur conformément à la demande de travail coopératif.

5. Contrôleur de station de base selon la revendication 4,
la seconde unité de détermination (104) étant en outre configurée pour :
acquérir le trafic de données total du premier secteur pendant la période d'écoute précédente si le trafic de données total du premier secteur pendant la période d'écoute actuelle est inférieur ou égal à la valeur de crête prédéfinie du premier secteur ;
déterminer si le trafic de données total du premier secteur pendant la période d'écoute précédente est supérieur à la valeur de crête prédéfinie du premier secteur ;
si le trafic de données total du premier secteur pendant la période d'écoute précédente est supérieur à la valeur de crête prédéfinie du premier secteur, envoyer une demande d'arrêt de coopération à une autre station de base, de sorte que l'autre station de base arrête de réaliser une transmission d'informations avec un équipement d'utilisateur dans le premier secteur conformément à la demande d'arrêt de coopération ;
obtenir une quantité de ressource correspondante à diminuer de l'antenne de rétroaction et une quantité de ressource correspondante à augmenter de l'antenne d'accès en fonction d'une différence de trafic entre le trafic de données total du premier secteur pendant la période d'écoute actuelle et le trafic de données moyen prédéfini du premier secteur ; et
si le trafic de données total du premier secteur pendant la période d'écoute précédente est inférieur ou égal à la valeur de crête prédéfinie du premier secteur, obtenir une quantité de ressource correspondante à diminuer de l'antenne de rétroaction et une quantité de ressources correspondante à augmenter de l'antenne d'accès en fonction d'une différence de trafic entre le trafic de données total du premier secteur pendant la période d'écoute actuelle et le trafic de données moyen prédéfini du premier secteur.

6. Contrôleur de station de base selon la revendication 4, la seconde unité de détermination (104) étant en outre configurée pour :
si le trafic de données total du premier secteur pendant la période d'écoute actuelle est inférieur ou égal au trafic de données moyen prédéfini du premier secteur, obtenir une quantité de ressource correspondante à augmenter de l'antenne de rétroaction et une quantité de ressource correspondante à diminuer de l'antenne d'accès en fonction d'une différence de trafic entre le trafic de données total du premier secteur pendant la période d'écoute actuelle et le trafic de données moyen prédéfini du premier secteur.

7. Contrôleur de station de base (10) selon la revendication 6, le contrôleur de station de base (10) comprenant en outre :
une seconde unité d'acquisition (107), configurée pour acquérir une quantité totale de tous les équipements d'utilisateurs actifs ;
une unité d'évaluation (108), configurée pour déterminer si la quantité totale de tous les équipements d'utilisateurs actifs est égale à 0 ; et
une seconde unité d'envoi (109), configurée pour : si la quantité totale de tous les équipements d'utilisateurs actifs est égale à 0, envoyer, à l'antenne de station de base, une indication de désactivation utilisée pour ordonner de désactiver toutes les antennes d'accès dans le premier secteur.

8. Procédé d'attribution de ressources, appliqué à un contrôleur de station de base, le procédé comprenant :
la réception (301) de signaux de référence envoyés par tous les équipements d'utilisateurs actifs dans un premier secteur pendant une période d'écoute actuelle, le premier secteur étant un secteur quelconque d'une antenne de station de base dans une station de base dans laquelle le contrôleur de station de base est situé ;
la détermination (302) de tous les équipements d'utilisateurs actifs en fonction des signaux de référence ;
l'acquisition (303) d'un trafic de données total du premier secteur pendant la période d'écoute actuelle en fonction de tous les équipements d'utilisateurs actifs ;
la détermination (304) d'une quantité de ressources à ajuster d'une antenne d'accès et d'une quantité de ressources à ajuster d'une antenne de rétroaction dans des ressources de l'antenne de station de base en fonction du trafic de données total du premier secteur pendant la période d'écoute actuelle ;
la génération (305) des informations de commande, les informations de commande comprenant la quantité de ressources à ajuster de l'antenne d'accès et la quantité de ressources à ajuster de l'antenne de rétroaction ; et
l'envoi (306) des informations de commande à l'antenne de station de base, les informations de commande comprenant la quantité de ressources à ajuster de l'antenne d'accès et la quantité de ressources à ajuster de l'antenne de rétroaction, de sorte que l'antenne de station de base ajuste une ressource de l'antenne d'accès et une ressource de l'antenne de rétroaction en fonction des informations de commande.

9. Procédé d'attribution de ressources selon la revendication 8, avant la détermination d'une quantité de ressources à ajuster d'une antenne d'accès et d'une quantité de ressources à ajuster d'une antenne de rétroaction dans des ressources de l'antenne de station de base en fonction du trafic de données total du premier secteur pendant la période d'écoute actuelle, les ressources initiales de l'antenne de station de base étant attribuées en fonction d'une proportion prédéfinie de l'antenne d'accès, de l'antenne de rétroaction et d'une antenne d'écoute.

10. Procédé d'attribution de ressources selon la revendication 9, un paramètre de l'antenne d'écoute étant prédéfini par le contrôleur de station de base, et le paramètre de l'antenne d'écoute comprenant une largeur de faisceau, un angle de faisceau, une période d'écoute et un temps d'écoute qui sont de l'antenne d'écoute.

11. Procédé d'attribution de ressources selon la revendication 10, la détermination d'une quantité de ressources à ajuster d'une antenne d'accès et d'une quantité de ressources à ajuster d'une antenne de rétroaction dans des ressources de l'antenne de station de base en fonction du trafic de données total du premier secteur pendant la période d'écoute actuelle comprenant :
l'acquisition d'un trafic de données moyen prédéfini du premier secteur ;
la détermination si le trafic de données total du premier secteur pendant la période d'écoute actuelle est supérieur au trafic de données moyen prédéfini du premier secteur ;
l'acquisition d'une valeur de crête prédéfinie du premier secteur si le trafic de données total du premier secteur pendant la période d'écoute actuelle est supérieur au trafic de données moyen prédéfini du premier secteur ;
la détermination si le trafic de données total du premier secteur pendant la période d'écoute actuelle est supérieur à la valeur de crête prédéfinie du premier secteur ;
l'acquisition d'un trafic de données total du premier secteur pendant une période d'écoute précédente si le trafic de données total du premier secteur pendant la période d'écoute actuelle est supérieur à la valeur de crête prédéfinie du premier secteur ;
la détermination si le trafic de données total du premier secteur pendant la précédente période d'écoute est supérieure à la valeur de crête prédéfinie du premier secteur ; et
l'envoi d'une demande de travail coopératif à une autre station de base si le trafic de données total du premier secteur pendant la période d'écoute précédente est inférieur ou égal à la valeur de crête prédéfinie du premier secteur, de sorte que l'autre station de base effectue une transmission d'informations avec un équipement d'utilisateur dans le premier secteur conformément à la demande de travail coopératif.

12. Procédé d'attribution de ressources selon la revendication 11, après la détermination si le trafic de données total du premier secteur pendant la période d'écoute actuelle est supérieur à la valeur de crête prédéfinie du premier secteur,
la détermination d'une quantité de ressources à ajuster d'une antenne d'accès et d'une quantité de ressources à ajuster d'une antenne de rétroaction dans des ressources de l'antenne de station de base en fonction du trafic de données total du premier secteur pendant la période d'écoute actuelle, comprenant en outre :
l'acquisition du trafic de données total du premier secteur pendant la période d'écoute précédente si le trafic de données total du premier secteur pendant la période d'écoute actuelle est inférieur ou égal à la valeur de crête prédéfinie du premier secteur ;
la détermination si le trafic de données total du premier secteur pendant la période d'écoute précédente est supérieur à la valeur de crête prédéfinie du premier secteur ;
si le trafic de données total du premier secteur pendant la période d'écoute précédente est supérieur à la valeur de crête prédéfinie du premier secteur, l'envoi d'une demande d'arrêt de coopération à une autre station de base, de sorte que l'autre station de base arrête de réaliser une transmission d'informations avec un équipement d'utilisateur dans le premier secteur conformément à la demande d'arrêt de coopération ;
l'obtention d'une quantité de ressource correspondante à diminuer de l'antenne de rétroaction et d'une quantité de ressource correspondante à augmenter de l'antenne d'accès en fonction d'une différence de trafic entre le trafic de données total du premier secteur pendant la période d'écoute actuelle et le trafic de données moyen prédéfini du premier secteur ; et
si le trafic de données total du premier secteur pendant la période d'écoute précédente est inférieur ou égal à la valeur de crête prédéfinie du premier secteur, l'obtention d'une quantité de ressource correspondante à diminuer de l'antenne de rétroaction et d'une quantité de ressource correspondante à augmenter de l'antenne d'accès en fonction d'une différence de trafic entre le trafic de données total du premier secteur pendant la période d'écoute actuelle et le trafic de données moyen prédéfini du premier secteur.

13. Procédé d'attribution de ressources selon la revendication 11, après la détermination si le trafic de données total du premier secteur pendant la période d'écoute actuelle est supérieure au trafic de données moyen prédéfini du premier secteur, le procédé d'attribution de ressources comprenant en outre :
si le trafic de données total du premier secteur pendant la période d'écoute actuelle est inférieur ou égal au trafic de données moyen prédéfini du premier secteur, l'obtention d'une quantité de ressource correspondante à augmenter de l'antenne de rétroaction et d'une quantité de ressource correspondante à diminuer de l'antenne d'accès en fonction d'une différence de trafic entre le trafic de données total du premier secteur pendant la période d'écoute actuelle et le trafic de données moyen prédéfini du premier secteur.

14. Procédé d'attribution de ressources selon la revendication 13, après la détermination de tous les équipements d'utilisateurs actifs en fonction des signaux de référence, le procédé d'attribution de ressources comprenant en outre :
l'acquisition d'une quantité totale de tous les équipements d'utilisateurs actifs ;
la détermination si la quantité totale de tous les équipements d'utilisateurs actifs est égale à 0 ; et
si la quantité totale de tous les équipements d'utilisateurs actifs est 0, l'envoi, à l'antenne de station de base, d'une indication de désactivation utilisée pour ordonner de désactiver toutes les antennes d'accès dans le premier secteur.
